# EUROPEAN PATENT APPLICATION

(11) **EP 4 571 550 A1**
(43) Date of publication of application: **18.06.2025**
(21) Application number: 23881299.4
(22) Date of filing: 29.06.2023
(51) Int. Cl.: G06F 21/57

(54) **SECURE BOOT METHOD AND APPARATUS, AND DEVICE**

(30) Priority: 27.10.2022 CN 202211325929
(71) Applicant: Huawei Technologies Co., Ltd., Shenzhen, Guangdong 518129 (CN)
(72) Inventor: ZHOU, Ziming, Shenzhen, Guangdong 518129 (CN); PAN, Shilin, Shenzhen, Guangdong 518129 (CN)
(74) Representative: MERH-IP Matias Erny Reichl Hoffmann Patentanwälte PartG mbB
(86) International application number: PCT/CN2023/104080
(87) International publication number: WO 2024/087710

(57) **Abstract**

A secure boot method and apparatus, and a device are provided, which relate to the fields of communication and electronic device technologies, to improve security of a secure boot apparatus. The method includes: A first boot item in a secure boot chain sends a check request to a security system, where the request is used to request to check a second boot item, and the second boot item is a next boot item of the first boot item; when receiving the check request, the security system performs security check on the second boot item, and sends a check result to the first boot item; if the check result indicates that the check on the second boot item succeeds, the security system sets access permission of the second boot item; and the first boot item boots the second boot item when receiving the check result. In this way, the security system can perform security check on each boot item in the secure boot chain, and manage and control permission of a hardware resource used by the boot item, to implement a principle of minimum permission of the hardware resource.

## Description

This application claims priority to Chinese Patent Application No. 202211325929.2, filed with the China National Intellectual Property Administration on October 27, 2022 and entitled "SECURE BOOT METHOD AND APPARATUS, AND DEVICE", which is incorporated herein by reference in its entirety.

### TECHNICAL FIELD

This application relates to the fields of communication and electronic device technologies, and in particular, to a secure boot method and apparatus, and a device.

### BACKGROUND

Currently, devices such as mobile phones, computers, in-vehicle infotainment, and internet of things (internet of things, IoT) devices use secure boot technologies to boot systems. Secure boot is to perform, in each phase of device boot, security check on a system or a program of a next phase, to ensure integrity, confidentiality, and authenticity of the system or the program, and then perform boot execution in the next phase. In this way, a secure boot chain of a device is implemented, and a secure and reliable system running environment is ensured.

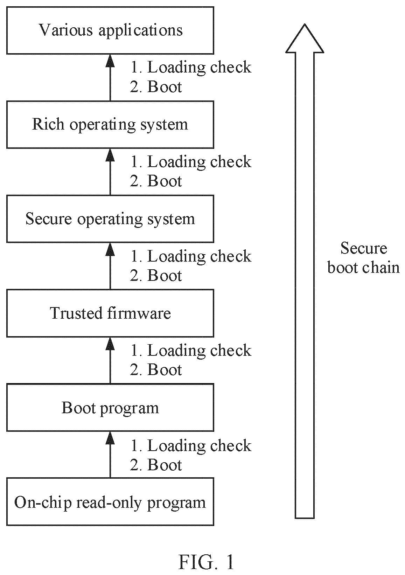

In a secure boot process in the conventional technology, a current system or program is used in each phase to perform security check on a system or a program of a next phase. For example, FIG. 1 is a diagram of a secure boot process of a device. A secure boot chain of the device is: an on-chip read-only program (bootROM) - a boot program (bootloader) - trusted firmware (trusted firmware) - a secure operating system (secure operating system, secure OS) - a rich operating system (rich operating system, rich OS) - various applications. Specifically, after the device is powered on, the on-chip read-only program first performs boot execution. Then, the on-chip read-only program performs security check on the boot program, and after the check succeeds, the boot program performs boot execution. Then, the boot program performs security check on the trusted firmware, and after the check succeeds, the trusted firmware performs boot execution. In this way, boot execution is sequentially performed based on a sequence in the secure boot chain, until boot execution of the applications is completed.

In the foregoing secure boot process, different systems or programs are used to perform security check in different phases of device boot. However, software and hardware architectures, system designs, security capabilities, and the like of different systems or programs are different, causing a wide exposure area and a large quantity of attack paths in the entire secure boot chain. As a result, many phenomena of attacking the device by using a vulnerability of each system or program in the secure boot chain occur.

### SUMMARY

This application provides a secure boot method and apparatus, and a device, to improve security of a secure boot apparatus.

To achieve the foregoing objective, this application uses the following technical solutions.

According to a first aspect, a secure boot method is provided, applied to a secure boot apparatus. The secure boot apparatus includes a secure boot chain and a security system, the secure boot chain may include a plurality of boot items arranged in a specific boot sequence, and the method includes: After a first boot item in the secure boot chain is booted, the first boot item sends a check request to the security system, where the check request is used to request to check a second boot item, the second boot item is a next boot item of the first boot item in the secure boot chain, the check request may include a boot image of the second boot item, and the boot image may include some related information of the second boot item. When the security system receives the check request, the security system performs security check on the second boot item, and sends a check result to the first boot item, where the check result indicates whether the check on the second boot item succeeds; and if the check result indicates that the check on the second boot item succeeds, the security system sets access permission of the second boot item; or when the first boot item receives the check result, if the check result indicates that the check on the second boot item succeeds, the first boot item boots the second boot item.

In the foregoing technical solution, the secure boot apparatus includes the secure boot chain and the independent security system. After the first boot item in the secure boot chain is booted, the first boot item can send, to the security system, the check request used to request to check the second boot item. When receiving the check request, the security system can perform security check on the second boot item, send the check result to the first boot item, and set the access permission of the second boot item when the check result indicates that the check on the second boot item succeeds, so that the first boot item boots the second boot item when it is determined that the check on the second boot item succeeds. In other words, the security system may be configured to perform security check on each boot item in the secure boot chain, and manage and control access permission of each boot item, to ensure that each boot item is booted after the security check on the boot item succeeds. This avoids a case in which different systems or programs perform security check in a secure boot process, and improves boot security of the apparatus. In addition, a principle of minimum permission of a hardware resource is implemented by setting the access permission of the second boot item.

In a possible implementation of the first aspect, the security system includes a read-only memory ROM program. That the security system performs security check on the second boot item includes: The ROM program performs security check on the second boot item. In the foregoing possible implementation, security check is performed on the second boot item by the ROM program in the security system, so that check reliability and security can be ensured.

In a possible implementation of the first aspect, the security system includes a read-only memory ROM program and a firmware program, and the method further includes: The ROM program performs security check on the firmware program, and boots the firmware program after the check succeeds. That the security system performs security check on the second boot item includes: The firmware program performs security check on the second boot item. In the foregoing possible implementation, security check is performed on the firmware program by the ROM program, and after the check succeeds, security check is performed on the second boot item by the firmware program, to further improve check reliability and security.

In a possible implementation of the first aspect, the security system further includes a flash memory, and the flash memory stores the firmware program; or the security system further includes a random access memory RAM, and before the ROM program boots the firmware program, the method further includes: The ROM program obtains the firmware program, and stores the firmware program in the RAM. In the foregoing possible implementation, the firmware program is stored in the flash memory, or the firmware program is stored in the RAM, so that storage flexibility of the firmware program can be improved.

In a possible implementation of the first aspect, before the first boot item sends the check request to the security system, the method further includes: The first boot item loads the second boot item. In the foregoing possible implementation, an implementation of loading the second boot item is provided.

In a possible implementation of the first aspect, the secure boot apparatus further includes a hardware system configured to run the secure boot chain, and the hardware system includes a first protection unit and an accessed unit. That the security system sets access permission of the second boot item includes: The security system configures control permission of the first protection unit, so that the first protection unit controls access permission of the second boot item to the accessed unit. In the foregoing possible implementation, the security system may further manage and control permission of a hardware resource used by each boot item in the secure boot chain, and enable corresponding permission of the used hardware resource after the security check on each boot item succeeds, to implement a principle of minimum permission of the hardware resource.

In a possible implementation of the first aspect, the hardware system further includes a hardware resource having an address space access capability, and if the hardware resource needs to be used to boot the second boot item, that the first protection unit controls access permission of the second boot item to the accessed unit includes: The first protection unit controls access permission of the second boot item to an address space of the accessed unit, where the accessed unit includes at least one of the following: a memory or a non-storage module; and the access permission includes at least one of the following: read/write, read-only, write-only, or inaccessible. Optionally, if the hardware resource includes a processor, the access permission further includes execution. In the foregoing possible implementation, the security system may manage and control, by setting the first protection unit, permission of a hardware resource used by the second boot item, and enable corresponding permission of the used hardware resource after the security check on the second boot item succeeds, to implement a principle of minimum permission of the hardware resource.

In a possible implementation of the first aspect, the secure boot apparatus further includes a hardware system configured to run the secure boot chain, the hardware system further includes a second protection unit and an accessed unit, and the second protection unit is configured to control access to an address space of the accessed unit. That the security system sets access permission of the second boot item further includes: The security system configures control permission of the second protection unit. In the foregoing possible implementation, the security system may manage and control, by setting the second protection unit, access of the second boot item to the address space of the accessed unit, to implement the principle of minimum permission of the hardware resource.

In a possible implementation of the first aspect, the hardware system further includes a hardware resource having an address space access capability, and the method further includes: When the hardware resource accesses the address space of the accessed unit, the second protection unit performs authentication on the access of the hardware resource, and allows the access of the hardware resource after the authentication succeeds. In the foregoing possible implementation, the second protection unit performs authentication on the access of the hardware resource, and allows the access of the hardware resource after the authentication succeeds, to further improve security of the secure boot apparatus.

In a possible implementation of the first aspect, after the security system performs security check on the second boot item, the method further includes: If the check result indicates that the check on the second boot item fails, the security system performs threat processing on the second boot item. In the foregoing possible implementation, when the check on the second boot item fails, the security system performs threat processing on the second boot item, so that security of the secure boot apparatus can be ensured.

According to a second aspect, a secure boot apparatus is provided. The secure boot apparatus includes a secure boot chain and a security system, and the secure boot chain may include a plurality of boot items arranged in a specific boot sequence. A first boot item in the secure boot chain is configured to send a check request to the security system after being booted, where the check request is used to request to check a second boot item, the second boot item is a next boot item of the first boot item in the secure boot chain, the check request may include a boot image of the second boot item, and the boot image may include some related information of the second boot item. The security system is configured to: when receiving the check request, perform security check on the second boot item, and send a check result to the first boot item, where the check result indicates whether the check on the second boot item succeeds. The security system is further configured to: if the check result indicates that the check on the second boot item succeeds, set access permission of the second boot item. The first boot item is further configured to: when receiving the check result, if the check result indicates that the check on the second boot item succeeds, boot the second boot item.

In a possible implementation of the second aspect, the security system includes a read-only memory ROM program, and the ROM program is configured to perform security check on the second boot item.

In a possible implementation of the second aspect, the security system includes a read-only memory ROM program and a firmware program. The ROM program is configured to perform security check on the firmware program, and the firmware program is booted after the check succeeds. The firmware program is configured to perform security check on the second boot item.

In a possible implementation of the second aspect, the security system further includes a flash memory, and the flash memory stores the firmware program; or the security system further includes a random access memory RAM, and the ROM program is further configured to: obtain the firmware program, and store the firmware program in the RAM.

In a possible implementation of the second aspect, the first boot item is further configured to load the second boot item before sending the check request to the security system.

In a possible implementation of the second aspect, the secure boot apparatus further includes a hardware system configured to run the secure boot chain, and the hardware system includes a first protection unit and an accessed unit. The security system is further configured to: if the check result indicates that the check on the second boot item succeeds, set control permission of the first protection unit, so that the first protection unit controls access permission of the second boot item to the accessed unit.

In a possible implementation of the second aspect, the hardware system further includes a hardware resource having an address space access capability, and if the hardware resource needs to be used to boot the second boot item, the first protection unit is further configured to control access permission of the second boot item to an address space of the accessed unit, where the accessed unit includes at least one of the following: a memory or a non-storage module; and the access permission includes at least one of the following: read/write, read-only, write-only, or inaccessible. Optionally, if the hardware resource includes a processor, the access permission further includes execution.

In a possible implementation of the second aspect, the secure boot apparatus further includes a hardware system configured to run the secure boot chain, the hardware system further includes a second protection unit and an accessed unit, the second protection unit is configured to control access to an address space of the accessed unit, and the security system is further configured to set control permission of the second protection unit.

In a possible implementation of the second aspect, the hardware system further includes a hardware resource having an address space access capability; and the second protection unit is further configured to: when the hardware resource accesses the address space of the accessed unit, perform authentication on the access of the hardware resource, and allow the access of the hardware resource after the authentication succeeds.

In a possible implementation of the second aspect, the security system is further configured to: if the check result indicates that the check on the second boot item fails, perform threat processing on the second boot item.

According to a third aspect, a chip system is provided. The chip system includes the secure boot apparatus provided in the first aspect or any one of the possible implementations of the first aspect.

According to a fourth aspect, an electronic device is provided. The electronic device includes the chip system provided in the second aspect, or includes the chip system provided in the first aspect or any one of the possible implementations of the first aspect.

It may be understood that, for beneficial effect that can be achieved by any one of the secure boot apparatus, the chip system, and the electronic device provided above, refer to the beneficial effect of the secure boot method provided above. Details are not described herein again.

### BRIEF DESCRIPTION OF DRAWINGS

FIG. 1 is a diagram of secure boot of a secure boot chain;
FIG. 2 is a diagram of attacking a secure boot chain according to an embodiment of this application;
FIG. 3 is a diagram of a structure of a secure boot apparatus according to an embodiment of this application;
FIG. 4 is a schematic flowchart of a secure boot method according to an embodiment of this application;
FIG. 5 is a schematic flowchart of another secure boot method according to an embodiment of this application;
FIG. 6 is a diagram of setting a first protection unit in a security system according to an embodiment of this application;
FIG. 7 is a diagram of setting a first protection unit in another security system according to an embodiment of this application;
FIG. 8 is a schematic flowchart of another secure boot method according to an embodiment of this application;
FIG. 9 is a diagram of setting a second protection unit in a security system according to an embodiment of this application;
FIG. 10 is a diagram of secure boot of a secure boot chain according to an embodiment of this application; and
FIG. 11 is a diagram of a structure of another secure boot apparatus according to an embodiment of this application.

### DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, in embodiments of this application, terms such as "first" and "second" are used for distinguishing between same objects or similar objects whose functions and purposes are basically the same. For example, a first threshold and a second threshold are merely used for distinguishing between different thresholds, and a sequence thereof is not limited. A person skilled in the art may understand that the terms such as "first" and "second" do not limit a quantity and an execution sequence.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described below, related background technologies in this application are first described.

A process from powering on a device to completely running the device is referred to as boot. Generally, there are two boot modes: trusted boot and secure boot. In the trusted boot, after a boot item that needs to be run currently is measured, the boot item is run regardless of whether the boot item is secure, and then a measurement result of the boot item is notified to a checker, so that the checker evaluates a security status of the running device. The secure boot is to perform, in each phase of device boot, security check on a system or a program of a next phase, to ensure integrity, confidentiality, and authenticity of the system or the program, and then perform boot execution in the next phase. In this way, a secure boot chain of a device is implemented, and a secure and reliable system running environment is ensured.

Currently, devices such as mobile phones, computers, in-vehicle infotainment, and internet of things (internet of things, IoT) devices use secure boot technologies to boot systems. In a secure boot process in the conventional technology, a current system or program is used in each phase to perform security check on a system or a program of a next phase. For example, FIG. 1 is a diagram of a secure boot process of a device. A secure boot chain of the device is: an on-chip read-only program (bootROM) - a boot program (bootloader) - trusted firmware (trusted firmware) - a secure operating system (secure operating system, secure OS) - a rich operating system (rich operating system, rich OS) - various applications. An environment formed by the secure operating system may be referred to as a secure execution environment. The rich operating system may also be referred to as a multi-functional operating system, and a correspondingly formed environment may be referred to as a rich execution environment. Specifically, after the device is powered on, the on-chip read-only program first performs boot execution. Then, the on-chip read-only program performs security check on the boot program, and after the check succeeds, the boot program performs boot execution. Then, the boot program performs security check on the trusted firmware, and after the check succeeds, the trusted firmware performs boot execution. In this way, boot execution is sequentially performed based on a sequence in the secure boot chain, until boot execution of the applications is completed.

A specific process in which a system or a program in a first phase performs security check on a system or a program in a next phase may be as follows: The system or the program in the first phase invokes a trusted module, performs a related operation like a hash operation on the system or the program in the next phase to obtain an operation result, and compares the operation result with a certificate of the system or the program in the next phase. If the operation result is consistent with the certificate, the check succeeds; or if the operation result is inconsistent with the certificate, the check fails. However, because an environment of the system or the program in the first phase is complex, for example, a complex hardware architecture exists and a plurality of service applications are run, in a process of invoking the trusted module, receiving the operation result, and performing comparison, vulnerabilities corresponding to the plurality of service applications and the hardware architecture are all exposed, and become intrusion points of a hacker.

In the foregoing secure boot process, different systems or programs are used to perform security check in different phases of device boot. However, software and hardware architectures, system designs, security capabilities, and the like of different systems or programs are different, causing a wide exposure area and a large quantity of attack paths in the entire secure boot chain. As a result, many phenomena of attacking the device by using a vulnerability of each system or program in the secure boot chain occur. In addition, the foregoing secure boot process lacks a reliable resource access and permission management mechanism, and cannot ensure that, in different phases of device boot, permission is granted as required after security check. In this case, once a system or a program is attacked, the hacker can execute and access a device and operate functions and data on the device with high permission, causing a serious security threat.

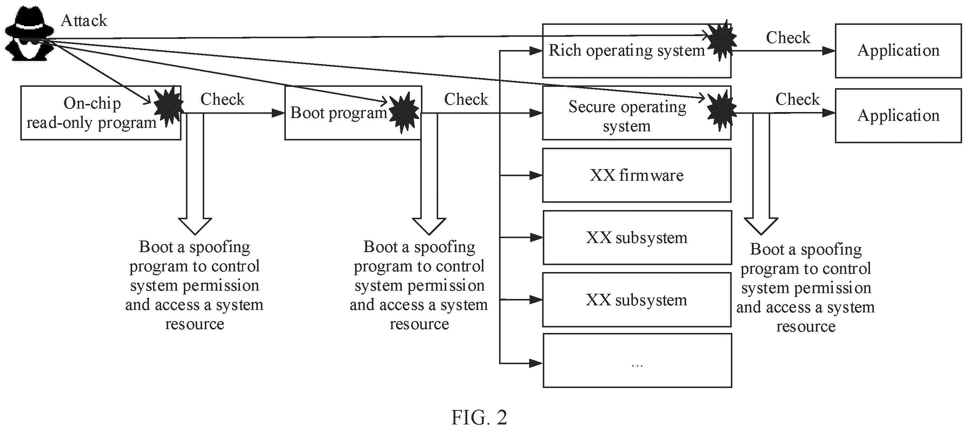

For example, FIG. 2 is a diagram of attacking a device by a hacker by using a vulnerability of a system in a secure boot chain. The secure boot chain may be: an on-chip read-only program - a boot program - a secure operating system, a rich operating system, system firmware, a plurality of subsystems, ... - various applications. In FIG. 2, the system firmware is represented as XX firmware, the plurality of subsystems are represented as XX subsystems, and an example in which a next phase of the secure operating system and the rich operating system is the applications is used for description. Specifically, after the on-chip read-only program is booted, or after the boot program is booted, or after the secure operating system or the rich operating system is booted, the hacker may use the vulnerability to bypass security check corresponding to a next phase of the system or the program, and boot a spoofing program to control system permission and access a system resource, to attack the device.

In view of this, embodiments of this application provide a secure boot method. The secure boot method is applied to a secure boot apparatus. The secure boot apparatus includes a secure boot chain and an independent security system. The security system can be configured to perform security check on each boot item in the secure boot chain, and each boot item is booted after the security check on the boot item succeeds. This avoids a case in which different systems or programs perform security check in a secure boot process, and improves boot security of the apparatus. In addition, the security system may further manage and control permission of a hardware resource used by each boot item, and enable corresponding permission of the used hardware resource after the security check on each boot item succeeds, to implement a principle of minimum permission of the hardware resource, so that an impact degree of a security threat is greatly reduced, and boot security of the apparatus is further improved.

In comparison with the related technology in which the system or the program in the first phase is used to perform security check on the system or the program in the next phase, in the process in which the secure boot apparatus boots the secure boot chain by using the independent security system, the security check process is completely performed in the security system, and a complex hardware architecture, a service application, and the like included in the system or the program in the first phase do not need to be set in the security system, and the security system may be used to perform only the security check process. In this way, security of the secure boot chain can be ensured.

The secure boot apparatus may be an electronic device, or a system on chip (system of chip, SoC) used in an electronic device. Optionally, the electronic device may include but is not limited to a mobile phone, a tablet computer, a notebook computer, a computer, an ultra-mobile personal computer (ultra-mobile personal computer, UMPC), a netbook, a video camera, a camera, a vehicle-mounted device (for example, a car, a bicycle, an electric vehicle, an airplane, a ship, a train, or a high-speed railway), a virtual reality (virtual reality, VR) device, an augmented reality (augmented reality, AR) device, or the like.

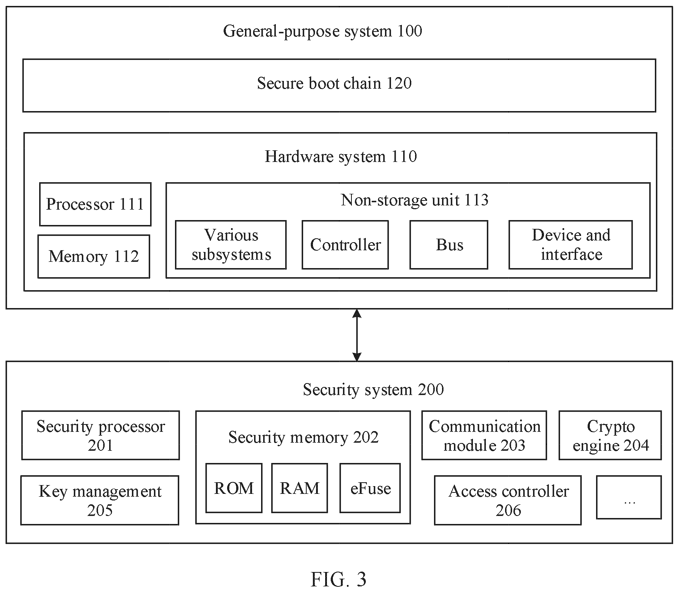

FIG. 3 is a diagram of a structure of a secure boot apparatus according to an embodiment of this application. The secure boot apparatus may include a general-purpose system 100 and a security system 200. The general-purpose system 100 may communicate with the security system 200. The general-purpose system 100 may include a hardware system 110 and a secure boot chain 120 running on the hardware system 110.

The hardware system 110 may include a plurality of hardware resources such as a processor 111, a memory (memory) 112, and a non-storage module 113. The processor 111 may include at least one of a central processing unit (central processing unit, CPU), a digital signal processor, an artificial intelligence (artificial intelligence, AI) processor, a microprocessor, a microcontroller, or the like. Further, the processor 111 may optionally include an application-specific integrated circuit, a field programmable gate array or another programmable logic device, a transistor logic device, a hardware accelerator, or any combination thereof. The processor may alternatively be a combination for implementing a computing function. The memory 112 may include a random access memory (random access memory, RAM) and/or a read-only memory (read-only memory, ROM).

The non-storage module 113 may include various subsystems, a bus, a controller, a device and an interface, and the like. The subsystems may include a power consumption subsystem, an audio subsystem, a video subsystem, an artificial intelligence (artificial intelligence, AI) subsystem, an image processing subsystem, a modem (modem) subsystem, a key management and encryption/decryption algorithm subsystem, and the like. The bus may include: an advanced extensible interface (advanced extensible interface, AXI), an advanced high performance bus (advanced high performance bus, AHB), an advanced peripheral bus (advanced peripheral bus, APB), a peripheral component interconnect express (peripheral component interconnect express, PCIE), a universal serial bus (universal serial bus, USB), an inter-integrated circuit (inter-integrated circuit, I2C) bus, a direct memory access (direct memory access, DMA), a general-purpose input/output (general-purpose input/output, GPIO) interface, a serial peripheral interface (serial peripheral interface, SPI), and the like. The controller may include: a CPU controller, a RAM controller, a universal flash storage (universal flash storage, UFS) controller, a serial advanced technology attachment (serial advanced technology attachment, SATA) controller, a secure digital memory card (secure digital memory card, SD) controller, power supply clock management, and the like. The device and interface may include: a timer, a high definition multimedia interface (high definition multimedia interface, HDMI), Bluetooth, a network adapter, wireless fidelity (wireless fidelity, WI-FI), a global positioning system (global positioning system, GPS), mobile communication, an input/output device, and the like. For example, the input/output device may include an input device, a display device, and/or a print device. The input device may include a touchscreen and/or another input device. The another input device includes but is not limited to one or more of a physical keyboard, a function button (for example, a volume control button or a power on/off button), a trackball, a mouse, a joystick, and the like.

In this embodiment of this application, the hardware system 110 includes the memory 112 and the non-storage module 113. Therefore, an address space corresponding to the memory 112 and a configuration address space corresponding to the non-storage module 113 may be collectively referred to as an address space of an accessed unit. The hardware system 110 may further include one or more hardware resources having an address space access capability (the hardware resource may also be referred to as an active (master) non-storage module). For example, the hardware resource may include a processor, a controller, a display unit, and the like. Hardware resources having the address space access capability in the hardware system 110 may be collectively referred to as an active access unit. In addition, the hardware system 110 may further include one or more protection units. For example, the one or more protection units may include a first protection unit and a second protection unit described in the following method embodiments. Optionally, the first protection unit and/or the second protection unit in the following may be integrated into a hardware resource like a processor or a memory, or may exist independently of the hardware resource like the processor or the memory, that is, the first protection unit and/or the second protection unit are/is separately deployed.

In addition, the secure boot chain 120 may include a plurality of boot items arranged in a specific boot sequence. The plurality of boot items include but are not limited to one or more of an on-chip read-only program, a boot program, trusted firmware, an operating system, an application, and the like. In an example, the secure boot chain 120 may be: the on-chip read-only program - the boot program - the trusted firmware - a secure operating system - a rich operating system - various applications. In another example, the secure boot chain 120 may be: the on-chip read-only program - the boot program - a secure operating system, a rich operating system, system firmware, a plurality of subsystems, ... - various applications.

In addition, the security system 200 may include a security processor 201, a security memory 202, a communication module (for example, a mailbox (mailbox)) 203, a crypto engine (crypto engine) 204, key management (key management) 205, an access controller 206, and the like. The security processor 201 may also be referred to as a trusted processor, may be specifically a processor that provides a trusted root, and may be configured to provide a secure execution environment for the security system. The security memory 202 may be a memory used in the security system. Optionally, the security memory 202 may include at least one of a random access memory RAM, a read-only memory ROM, a one-time programmable memory (eFuse), and the like. The communication module 203 may be configured to transmit information from the general-purpose system 100 to the security processor 201, or transmit information of the security processor 201 to the general-purpose system 100. The crypto engine 204 may be configured to provide an encryption service for the security system. The key management 205 may be configured to manage various keys related to the security system. The access controller 206 may be configured to set control permission of a hardware resource in the general-purpose system 110. For example, the access controller 206 may be configured to set control permission of the first protection unit and/or control permission of the second protection unit in the following.

It may be understood that the foregoing specific structures and related descriptions of the general-purpose system 100 and the security system 200 are merely examples. In actual application, the general-purpose system 100 and the security system 200 may further include more or fewer components than those shown in the figure, or some components are combined, or a different component arrangement is used. In this embodiment of this application, the security system 200 only needs to be capable of performing security check on a boot item in the secure boot chain 120 of the general-purpose system 100, and managing and controlling control permission and access permission of some hardware resources in the hardware system 110 of the general-purpose system 100.

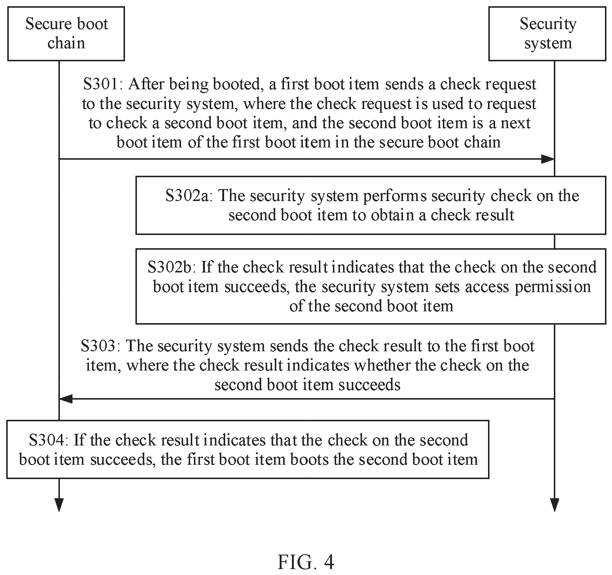

FIG. 4 is a schematic flowchart of a secure boot method according to an embodiment of this application. The method may be applied to a secure boot apparatus. The secure boot apparatus includes a secure boot chain and a security system. The method includes the following steps.

S301: After a first boot item is booted, the first boot item sends a check request to the security system, where the check request is used to request to check a second boot item, and the second boot item is a next boot item of the first boot item in the secure boot chain.

The secure boot chain may include a plurality of boot items arranged in a specific boot sequence. The first boot item may be a boot item other than a last boot item in the plurality of boot items. The second boot item may be the next boot item of the first boot item in the plurality of boot items. For example, it is assumed that the secure boot chain is: an on-chip read-only program - a boot program - trusted firmware - a secure operating system - a rich operating system - various applications. In this case, the first boot item may be the on-chip read-only program, and the second boot item is the boot program; or the first boot item may be the boot program, and the second boot item may be the trusted firmware.

In addition, each boot item in the secure boot chain may communicate with the security system only by using a check request and a check result. To be specific, the boot item may send the check request to the security system, and the security system may send the check result to the boot item. In this way, the boot item in the secure boot chain cannot modify information in the security system.

Optionally, the check request and the check result may be an information frame in a specific format. The information frame in the specific format may be set or agreed on in advance. For example, the information frame in the specific format may include 2 bits. The 1^{st} bit indicates that the information frame is the check request, and the 2^{nd} bit indicates that the information frame is the check result. A value 1 of each bit indicates that an indication of the bit is valid, and a value 0 indicates that the indication is invalid.

In addition, the check request is used to request to check the second boot item. Optionally, the check request may include a boot image of the second boot item, and the boot image may include some related information of the second boot item. For example, the related information may include but is not limited to an installation time, an installation location, a latest update time, a size, and the like.

In a possible embodiment, when the first boot item is the 1^{st} boot item in the plurality of boot items, the first boot item may be directly booted after the secure boot apparatus is powered on. When the first boot item is not the 1^{st} boot item in the plurality of boot items, before the first boot item is booted, security check also needs to be performed on the first boot item, and the first boot item is booted after the check succeeds. After the first boot item is booted, the first boot item may send the check request to the security system, where the check request is used to request to check the second boot item. Specific descriptions of performing security check on the first boot item are consistent with the descriptions of performing security check on the second boot item in this specification. For details, refer to related descriptions in this specification. Details are not described in this embodiment of this application again.

Optionally, after the first boot item is booted and before the check request is sent to the security system, the method may further include: The first boot item loads the second boot item. Correspondingly, after the first boot item loads the second boot item, the first boot item may send the check request to the security system, to request the security system to perform security check on the second boot item.

S302a: When the security system receives the check request, the security system performs security check on the second boot item to obtain a check result.

The check result is a result obtained by the security system by performing security check on the second boot item. When the security check on the second boot item succeeds, the check result may indicate that the check on the second boot item succeeds. If the security check on the second boot item fails, the check result may indicate that the check on the second boot item fails.

Optionally, the security system performs signature verification and check on the boot image and an image certificate of the second boot item, to obtain the check result. The image certificate may be stored in the security system, or may be stored in the first boot item and sent by the first boot item to the security system. Alternatively, in another possible embodiment, the check request may include the boot image of the second boot item. When the security system receives the check request from the first boot item, the security system may perform security check on the second boot item based on the boot image of the second boot item, to obtain the check result. For example, the security system may perform calculation on the boot image of the second boot item according to a preset algorithm, to obtain a security check value of the second boot item. If the security check value is consistent with a standard check value that is of the second boot item and that is pre-stored in the security system, it is determined that the check on the second boot item succeeds. If the security check value is inconsistent with the standard check value that is of the second boot item and that is pre-stored in the security system, it is determined that the check on the second boot item fails. The preset algorithm may include but is not limited to a symmetric encryption algorithm, an asymmetric encryption algorithm, a hash algorithm, and the like.

The security system may specifically perform security check on the second boot item by using different components in the security system. The following uses two possible implementations as examples for description.

In the 1^{st} possible implementation, the security system includes a read-only memory ROM program. That the security system performs security check on the second boot item specifically includes: The ROM program performs security check on the second boot item.

In the 2^{nd} possible implementation, the security system includes a read-only memory ROM program and a firmware program. The method further includes: The ROM program performs security check on the firmware program, and boots the firmware program after the check succeeds. Correspondingly, that the security system performs security check on the second boot item includes: The firmware program performs security check on the second boot item.

Optionally, in the 2^{nd} implementation, the security system may further include a flash memory, and the flash memory may store the firmware program. In this way, after the ROM program is booted, the firmware program may be loaded and security check may be performed on the firmware program. Alternatively, the security system further includes a random access memory RAM. Before the ROM program boots the firmware program, the ROM program may first obtain the firmware program, store the firmware program in the RAM, and then perform security check on the firmware program.

S303: The security system sends the check result to the first boot item, where the check result indicates whether the check on the second boot item succeeds.

When the security system obtains the check result, the security system may send the check result to the first boot item, to notify the first boot item of the check result of the second boot item. If the security check on the second boot item succeeds, the check result indicates that the check on the second boot item succeeds. If the security check on the second boot item fails, the check result indicates that the check on the second boot item fails.

Optionally, if the check result indicates that the check on the second boot item fails, the security system may further perform threat processing on the second boot item. For example, when the security system determines that the check on the second boot item fails, the security system may indicate the first boot item to reload the second boot item, or indicate the first boot item to refuse to boot the second boot item, or the security system triggers alarm information or resets a general-purpose system.

S304: When the first boot item receives the check result, if the check result indicates that the check on the second boot item succeeds, the first boot item boots the second boot item.

Specifically, when the first boot item receives the check result, if the check result indicates that the check on the second boot item succeeds, the first boot item boots the second boot item. In other words, after the security check performed by the security system on the second boot item succeeds, the first boot item boots the second boot item. If the check result indicates that the check on the second boot item fails, the first boot item may refuse to boot the second boot item.

In this embodiment of this application, the secure boot apparatus includes the secure boot chain and the independent security system. After the first boot item in the secure boot chain is booted, the first boot item can send, to the security system, the check request used to request to check the second boot item. When receiving the check request, the security system can perform security check on the second boot item, and send the check result to the first boot item, so that the first boot item boots the second boot item when it is determined that the check on the second boot item succeeds. In other words, the security system can be configured to perform security check on each boot item in the secure boot chain, and each boot item is booted after the security check on the boot item succeeds. This avoids a case in which different systems or programs perform security check in a secure boot process, and improves boot security of the apparatus.

Further, as shown in FIG. 4, before S303, the method further includes S302b: If the check result indicates that the check on the second boot item succeeds, the security system sets access permission of the second boot item. The step of sending, by the security system, the check result to the first boot item in S303 and the step of setting the access permission of the second boot item in S302b may be performed in any sequence. In an example, after determining that the check on the second boot item succeeds, the security system may first set the access permission of the second boot item, and then send the check result to the first boot item.

In other words, the security system may further manage and control permission of a hardware resource used by each boot item in the secure boot chain, and enable corresponding permission of the used hardware resource after the security check on each boot item succeeds, to implement a principle of minimum permission of the hardware resource. Optionally, the security system may include an access controller, and the access controller may be specifically configured to manage and control the permission of the hardware resource used by each boot item.

The following describes how the security system manages and controls the permission of the hardware resource used by each boot item in the secure boot chain.

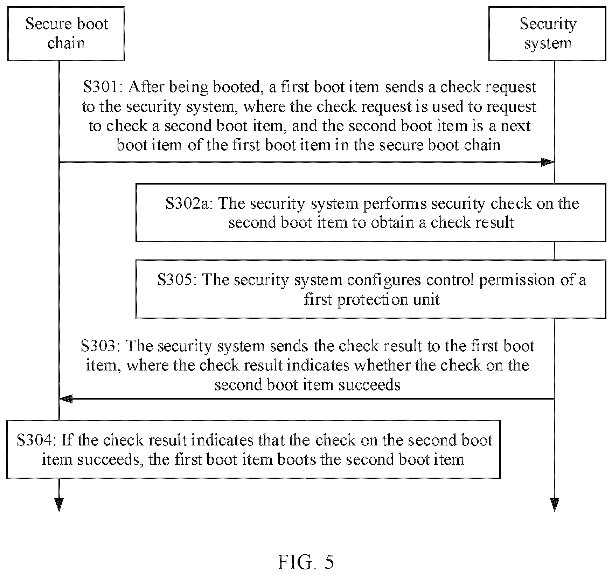

In a possible embodiment, the secure boot apparatus further includes a hardware system configured to run the secure boot chain, and the hardware system includes a first protection unit and an accessed unit. Correspondingly, with reference to FIG. 4, as shown in FIG. 5, if the check result indicates that the check on the second boot item succeeds, S302b may specifically include S305.

S305: The security system configures control permission of the first protection unit.

The first protection unit may be a memory protection unit (memory protection unit, MPU) or an access region (access region) protection unit. Optionally, the first protection unit may be integrated into a processor or a memory included in the hardware system, or may be disposed independently of the processor or the memory. For example, the first protection unit may be an MPU of an ARM, or the first protection unit may be a physical memory protection (physical memory protection, PMP) unit of a RISCV.

In addition, the accessed unit may include at least one of a memory or a non-storage module in the hardware system. For example, the accessed unit may include only the memory, or include only the non-storage module, or include both the memory and the non-storage module. A memory address space corresponding to the memory and/or an address space corresponding to the non-storage module may be collectively referred to as an address space of the accessed unit. An example in which the accessed unit includes both the memory and the non-storage module is used below for description.

After the security system performs security check on the second boot item and determines that the check on the second boot item succeeds, the security system may set the control permission of the first protection unit. Specifically, that the security system configures the control permission of the first protection unit may include: The security system sends configuration information to the first protection unit, where the configuration information is used to control access permission for the address space of the accessed unit; and when the first protection unit receives the configuration information, the first protection unit may control the access permission for the address space of the accessed unit based on the configuration information. In other words, the security system may control, by using the first protection unit, the access permission for the address space of the accessed unit, and the first protection unit may grant, in different address spaces based on the configuration information, corresponding permission to an active access unit (namely, a hardware resource having an address space access capability, for example, a central processing unit) used by the second boot item in the hardware system. Optionally, the security system may further set an on or off state of the first protection unit.

Optionally, the access permission for the address space of the accessed unit may include at least one of the following: read/write, read-only, write-only, or inaccessible. Further, if the active access unit (namely, the hardware resource having the address space access capability) is a processor, the access permission may further include execution.

Further, after the security system configures the control permission of the first protection unit, the first protection unit may control permission of the hardware resource used by the second boot item. In other words, the first protection unit may control access permission of the active access unit in the second boot item to the address space.

When the first boot item receives the check result, and the check result indicates that the check on the second boot item succeeds, if the active access unit (namely, the hardware resource having the address space access capability) in the hardware system needs to be used to boot the second boot item, the first protection unit may control access permission of the second boot item to the accessed unit, which may be specifically controlling access permission of the active access unit used by the second boot item to the accessed unit.

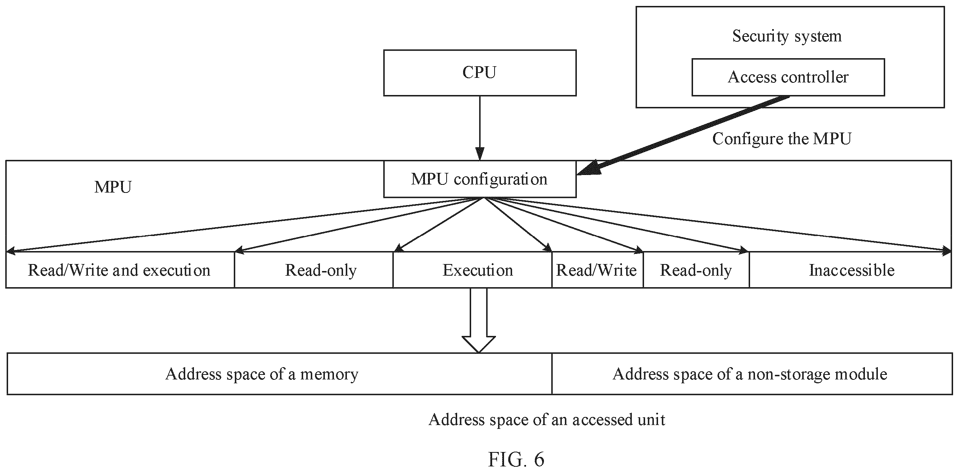

In an example, as shown in FIG. 6, the hardware system includes a central processing unit CPU, an accessed unit, and an MPU (namely, the first protection unit), and the security system includes an access controller. Specifically, if the CPU needs to be used to boot the second boot item, after the security check on the second boot item, the access controller may set the MPU, for example, send, to the MPU, configuration information used to set access permission of the CPU for the address space of the accessed unit. When the MPU receives the configuration information, the MPU may set address spaces with different access permission for the CPU based on a configuration of the access controller. The address spaces with different access permission may include: an address space that allows read/write and execution, an address space that allows read-only, an address space that allows execution, an address space that allows read/write, and an inaccessible address space.

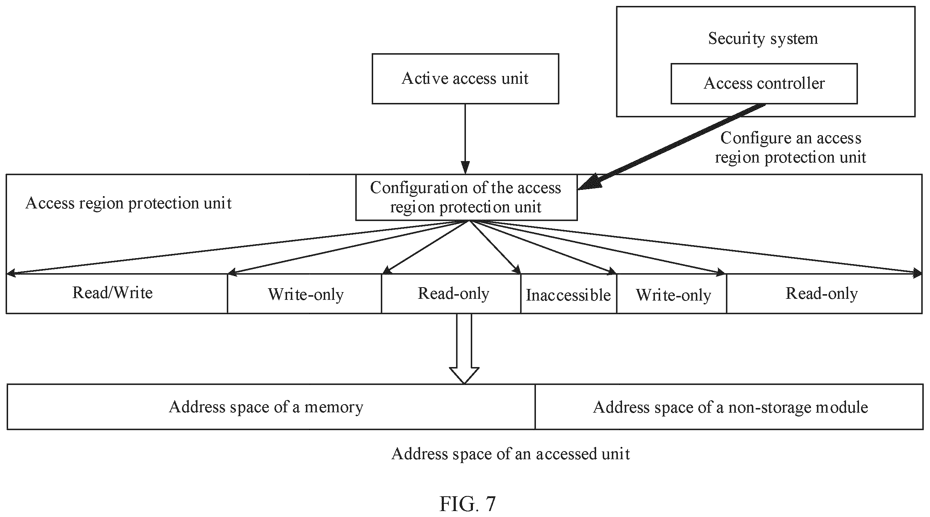

In another example, as shown in FIG. 7, the hardware system includes an active access unit of a non-processor type, an accessed unit, and an access region protection unit (namely, the first protection unit), and the security system includes an access controller. Specifically, if the active access unit needs to be used to boot the second boot item, after the security check on the second boot item, the access controller may set the access region protection unit, for example, send, to the access region protection unit, configuration information used to set access permission of the active access unit for the address space of the accessed unit. When the access region protection unit receives the configuration information, the access region protection unit may control, based on a configuration of the access controller, access of the active access unit to address spaces with different access permission. The address spaces with different access permission may include: an address space that allows read/write, an address space that allows write-only, an address space that allows read-only, and an inaccessible address space.

Optionally, after security check is performed on each boot item in the secure boot chain, the security system may set, for the first protection unit, control permission for a hardware resource that needs to be used to boot the boot item, so that the first protection unit grants, based on the configuration of the security system, corresponding permission of the hardware resource that needs to be used to boot the boot item.

Alternatively, the security system may further send the configuration information to the first boot item, and the first boot item configures the control permission of the first protection unit based on the configuration information. In this way, after the first boot item configures the control permission of the first protection unit, the first protection unit may control the permission of the hardware resource used by the second boot item.

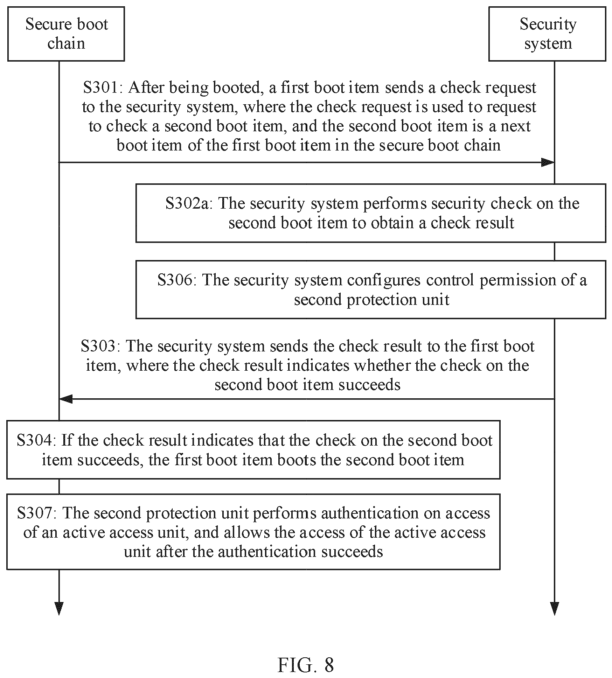

In another possible embodiment, the hardware system further includes a second protection unit, and the second protection unit is configured to control access to the address space of the accessed unit. Correspondingly, as shown in FIG. 8, S302b may further specifically include S306 and S307. In FIG. 8, S305 is not shown, and an example in which S306 is after S302a and S307 is after S304 is used for description.

S306: The security system configures control permission of the second protection unit. Optionally, the control permission may be used to control access permission of the hardware resource used by the second boot item.

The second protection unit may be a region firewall (region firewall). An address space protected by the second protection unit (or referred to as a protected address space) may be a part or all of the address space of the accessed unit. Optionally, the security system may set access types and security attributes of different active access units in the protected address space. For example, the access type may include read-only, write-only, read/write, and the like, and the security attribute may include secure and non-secure.

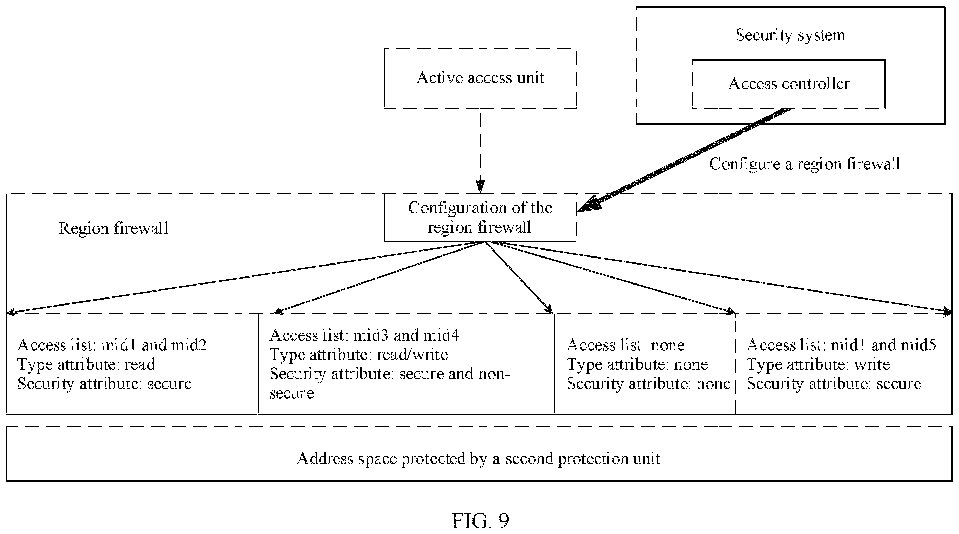

For example, as shown in FIG. 9, it is assumed that the second protection unit is a regional firewall, and an address space protected by the regional firewall may be divided into four parts. The security system may set that a list of active access units that are allowed to access the 1^{st} part includes mid1 and mid2, a corresponding type attribute is read-only, and a corresponding security attribute is secure; a list of active access units that are allowed to access the 2^{nd} part includes mid3 and mid4, a corresponding type attribute is read/write, a corresponding security attribute includes secure and non-secure; the 3^{rd} part is not allowed to be accessed (that is, a corresponding access list is none, a type attribute is none, and a security attribute is none); and a list of active access units that are allowed to access to the 4^{th} part includes mid1 and mid5, a corresponding type attribute is write, and a corresponding security attribute is secure.

S307: The second protection unit performs authentication on the access of the active access unit, and allows the access of the active access unit after the authentication succeeds.

The active access unit refers to a hardware resource having an address space access capability in the hardware system. Specifically, the second boot item in the secure boot chain is used as an example. After the first boot item boots the second boot item, the active access unit used by the second boot item may access the address space protected by the second protection unit. In this case, when the active access unit used by the second boot item performs access, the second protection unit performs authentication on the access of the active access unit, and then allows the access of the active access unit after the authentication succeeds.

Optionally, the security system may specifically implement the configuration of the second protection unit and access control of the second protection unit on the protected address space in a plurality of different implementations. For example, the security system may set, for the second protection unit, a blocklist in which access to the protected address space is not allowed, or set a trustlist in which access to the protected address space is allowed, or perform read/write and secure/non-secure authentication configuration (for example, a TZASC of the ARM) on each active access unit, or do not restrict the active access unit to perform only secure and non-secure authentication (for example, a TZPC or TZMA of the ARM).

Optionally, after security check is performed on each boot item in the secure boot chain, the security system may set, for the second protection unit, access permission for a hardware resource that needs to be used to boot the boot item, so that the second protection unit controls access of the hardware resource to the protected address space based on the configuration of the security system.

In this embodiment of this application, the security system may further manage and control permission of the hardware resource used by each boot item, and enable corresponding permission of the used hardware resource after security check on each boot item succeeds, or perform corresponding authentication when the hardware resource performs access, to implement a principle of minimum permission of the hardware resource, so that an impact degree of a security threat is greatly reduced, and boot security of the apparatus is further improved.

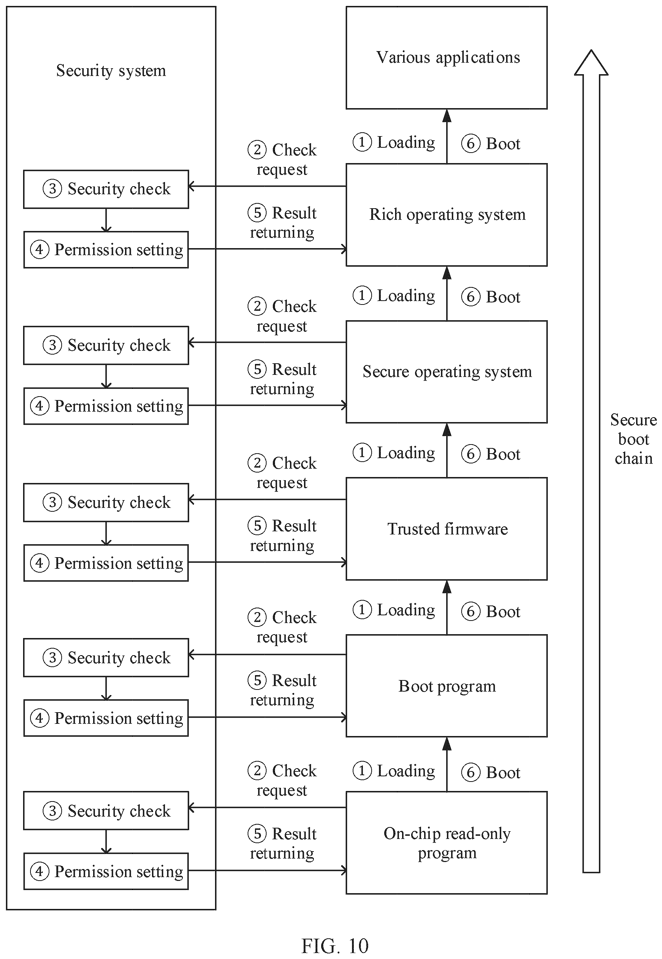

For ease of understanding, the following uses the boot chain shown in FIG. 1 as an example to describe the secure boot method provided in this embodiment of this application. Specifically, for the secure boot chain shown in FIG. 1, as shown in FIG. 10, the secure boot method includes: After the on-chip read-only program is booted, the on-chip read-only program loads the boot program, which is indicated as ① loading in FIG. 10. After the loading is completed, the on-chip read-only program sends, to the security system, a check request used to request to check the boot program, which is indicated as ② check request in FIG. 10. After receiving the check request, the security system performs security check on the boot program, which is indicated as ③ security check in FIG. 10. If the security check on the boot program succeeds, the security system configures, according to the method provided above, permission of a hardware resource used by the boot program, which is indicated as ④ permission setting in FIG. 10. Then, the security system may send a check result to the on-chip read-only program, where the check result indicates that the security check on the boot program succeeds, which is indicated as ⑤ result returning in FIG. 10. When the on-chip read-only program receives the check result, the on-chip read-only program boots the boot program, which is indicated as ⑥ boot in FIG. 10. Similarly, the boot program, the trusted firmware, the secure operating system, and the rich operating system all may perform, in a manner similar to the foregoing manner, security check on a next-phase to-be-booted system or program, and boot the corresponding system or program after determining that the security check succeeds.

Further, on the basis that the security system performs security check on the second boot item, the first boot item may further perform security check on the second boot item. In this case, the first boot item can boot the second boot item only when security check performed by the security system on the second boot item succeeds and security check performed by the first boot item on the second boot item also succeeds. In this way, when the security system apparatus boots the secure boot chain, heterogeneous dual-link secure boot may be formed, to further improve security of the secure boot apparatus.

In the secure boot method provided in this embodiment of this application, the security system performs security check on each boot item in the secure boot chain, and each boot item is booted after the security check on the boot item succeeds. This avoids a case in which different systems or programs perform security check in a secure boot process, and improves security of the secure boot apparatus. In addition, the security system may further manage and control permission of a hardware resource used by each boot item, and enable corresponding permission of the used hardware resource after the security check on each boot item succeeds, to implement a principle of minimum permission of the hardware resource, so that an impact degree of a security threat is greatly reduced, and security of the secure boot apparatus is further improved.

The foregoing mainly describes the secure boot method provided in embodiments of this application from a perspective of the secure boot apparatus. It may be understood that, to implement the foregoing functions, the secure boot apparatus includes corresponding hardware structures and/or software modules for performing the functions. A person skilled in the art should be easily aware that, in combination with structures and algorithm steps of the examples described in embodiments disclosed in this specification, this application can be implemented by a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

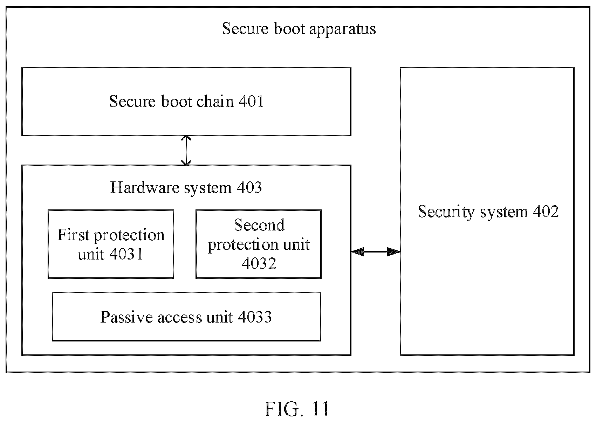

The secure boot apparatus in the foregoing embodiments is a system-level apparatus. A software part or a hardware part inside the secure boot apparatus may be independently and specifically configured to implement a secure boot function. FIG. 11 is a diagram of a possible structure of another secure boot apparatus according to this embodiment. The secure boot apparatus includes a secure boot chain 401 and a security system 402. The secure boot chain may include a first boot item and a second boot item, and the second boot item is a next boot item of the first boot item. In this embodiment of this application, the first boot item in the secure boot chain 401 is configured to support the apparatus in performing one or more of S301, the step of receiving the check result sent in S303, and S304 in the method embodiments, and/or another technical process described in the foregoing method embodiments. The security system 402 is configured to support the apparatus in performing one or more of S302a, S302b, and S303 in the method embodiments, and/or another technical process described in the foregoing method embodiments.

In a possible implementation, the security system 402 includes a read-only memory ROM program. The ROM program is configured to perform security check on the second boot item.

In another possible implementation, the security system 402 includes a read-only memory ROM program and a firmware program. The ROM program is configured to perform security check on the firmware program, and boot the firmware program after the check succeeds. The firmware program is configured to perform security check on the second boot item. Optionally, the security system 402 further includes a flash memory, and the flash memory stores the firmware program. Alternatively, the security system further includes a random access memory RAM, and the ROM program is further configured to: obtain the firmware program, and store the firmware program in the RAM.

Further, the secure boot apparatus further includes a hardware system 403 configured to run the secure boot chain 401. The hardware system 403 includes a first protection unit 4031, a second protection unit 4032, and a passive access unit 4033. Correspondingly, the security system 402 is further configured to support the apparatus in performing one or more steps in S305 and S306 in the method embodiments, and/or another technical process described in the foregoing method embodiments. The first protection unit 4031 is configured to support the apparatus in performing the step of controlling access permission of the second boot item to the accessed unit in the method embodiments. The second protection unit 4032 is configured to support the apparatus in performing S307 in the method embodiments.

In the secure boot apparatus provided in this embodiment of this application, the security system performs security check on each boot item in the secure boot chain, and each boot item is booted after the security check on the boot item succeeds. This avoids a case in which different systems or programs perform security check in a secure boot process, and improves security of the secure boot apparatus. In addition, the security system may further manage and control permission of a hardware resource used by each boot item, and enable corresponding permission of the used hardware resource after the security check on each boot item succeeds, to implement a principle of minimum permission of the hardware resource, so that an impact degree of a security threat is greatly reduced, and security of the secure boot apparatus is further improved.

Based on this, an embodiment of this application further provides a chip system. The chip system includes the secure boot apparatus provided in the foregoing method embodiments.

An embodiment of this application further provides an electronic device. The electronic device may include the foregoing chip system or the secure boot apparatus provided in the foregoing method embodiments. Optionally, the electronic device may include but is not limited to a mobile phone, a tablet computer, a notebook computer, a computer, an ultra-mobile personal computer (ultra-mobile personal computer, UMPC), a netbook, a video camera, a camera, a vehicle-mounted device (for example, a car, a bicycle, an electric vehicle, an airplane, a ship, a train, or a high-speed railway), a virtual reality (virtual reality, VR) device, an augmented reality (augmented reality, AR) device, or the like.

According to another aspect of this application, a computer-readable storage medium is further provided. The computer-readable storage medium stores instructions. When the instructions are run on a device (for example, the device may be a single-chip microcomputer, a chip, a computer, or a processor), the device is enabled to perform one or more steps in the foregoing method embodiments. When each of the component modules in the secure boot apparatus is implemented in a form of software functional unit and is sold or used as an independent product, the component modules may be stored in the computer-readable storage medium.

Based on such an understanding, an embodiment of this application further provides a computer program product including instructions. The technical solutions of this application essentially, or the part contributing to the conventional technology, or all or some of the technical solutions may be implemented in a form of a software product. The computer software product is stored in a storage medium and includes several instructions for instructing a computer device or a processor in the computer device to perform all or some of the steps of the methods described in embodiments of this application.

The foregoing detailed descriptions of the secure boot method may be correspondingly referenced to the secure boot apparatus, the chip system, and the electronic device. Details are not described again in embodiments of this application.

Finally, it should be noted that the foregoing descriptions are merely specific implementations of this application, but is not intended to limit the protection scope of embodiments of this application. Any variation or replacement within the technical scope disclosed in embodiments of this application shall fall within the protection scope of embodiments of this application. Therefore, the protection scope of this application shall be subject to the protection scope of the claims.

## Claims

1. A secure boot method, applied to a secure boot apparatus, wherein the secure boot apparatus comprises a secure boot chain and a security system, and the method comprises:
after a first boot item in the secure boot chain is booted, sending, by the first boot item, a check request to the security system, wherein the check request is used to request to check a second boot item, and the second boot item is a next boot item of the first boot item in the secure boot chain;
when the security system receives the check request, performing, by the security system, security check on the second boot item, and sending a check result to the first boot item, wherein the check result indicates whether the check on the second boot item succeeds;
if the check result indicates that the check on the second boot item succeeds, setting, by the security system, access permission of the second boot item; and
when the first boot item receives the check result, if the check result indicates that the check on the second boot item succeeds, booting, by the first boot item, the second boot item.

2. The method according to claim 1, wherein the security system comprises a read-only memory ROM program, and the performing, by the security system, security check on the second boot item comprises:
performing, by the ROM program, security check on the second boot item.

3. The method according to claim 1, wherein the security system comprises a read-only memory ROM program and a firmware program, and the method further comprises:
performing, by the ROM program, security check on the firmware program, and booting the firmware program after the check succeeds; and
the performing, by the security system, security check on the second boot item comprises:
performing, by the firmware program, security check on the second boot item.

4. The method according to claim 3, wherein the security system further comprises a flash memory, and the flash memory stores the firmware program; or
the security system further comprises a random access memory RAM, and before the booting, by the ROM program, the firmware program, the method further comprises:
obtaining, by the ROM program, the firmware program, and storing the firmware program in the RAM.

5. The method according to any one of claims 1 to 4, wherein before the sending, by the first boot item, a check request to the security system, the method further comprises:
loading, by the first boot item, the second boot item.

6. The method according to any one of claims 1 to 5, wherein the secure boot apparatus further comprises a hardware system configured to run the secure boot chain, the hardware system comprises a first protection unit and an accessed unit, and the setting, by the security system, access permission of the second boot item comprises:
setting, by the security system, control permission of the first protection unit, so that the first protection unit controls access permission of the second boot item to the accessed unit.

7. The method according to claim 6, wherein the hardware system further comprises a hardware resource having an address space access capability, and if the hardware resource needs to be used to boot the second boot item, the method further comprises:
controlling, by the first protection unit, access permission of the second boot item to an address space of the accessed unit, wherein
the accessed unit comprises at least one of the following: a memory or a non-storage module; and the access permission comprises at least one of the following: read/write, read-only, write-only, or inaccessible.

8. The method according to claim 7, wherein if the hardware resource comprises a processor, the access permission further comprises execution.

9. The method according to any one of claims 1 to 8, wherein the secure boot apparatus further comprises the hardware system configured to run the secure boot chain, the hardware system further comprises a second protection unit and an accessed unit, the second protection unit is configured to control access to an address space of the accessed unit, and the setting, by the security system, access permission of the second boot item further comprises:
setting, by the security system, control permission of the second protection unit.

10. The method according to claim 9, wherein the hardware system further comprises the hardware resource having the address space access capability, and the method further comprises:
when the hardware resource accesses the address space of the accessed unit, performing, by the second protection unit, authentication on the access of the hardware resource, and allowing the access of the hardware resource after the authentication succeeds.

11. The method according to claim 1, wherein after the performing, by the security system, security check on the second boot item, the method further comprises:
if the check result indicates that the check on the second boot item fails, performing, by the security system, threat processing on the second boot item.

12. A secure boot apparatus, wherein the secure boot apparatus comprises a secure boot chain and a security system;
a first boot item in the secure boot chain is configured to send a check request to the security system after being booted, wherein the check request is used to request to check a second boot item, and the second boot item is a next boot item of the first boot item in the secure boot chain;
the security system is configured to: when receiving the check request, perform security check on the second boot item, and send a check result to the first boot item, wherein the check result indicates whether the check on the second boot item succeeds;
the security system is further configured to: if the check result indicates that the check on the second boot item succeeds, set access permission of the second boot item; and
the first boot item is further configured to: when receiving the check result, if the check result indicates that the check on the second boot item succeeds, boot the second boot item.

13. The apparatus according to claim 12, wherein the security system comprises a read-only memory ROM program; and
the ROM program is configured to perform security check on the second boot item.

14. The apparatus according to claim 12, wherein the security system comprises a read-only memory ROM program and a firmware program;
the ROM program is configured to: perform security check on the firmware program, and boot the firmware program after the check succeeds; and
the firmware program is configured to perform security check on the second boot item.

15. The apparatus according to claim 14, wherein the security system further comprises a flash memory, and the flash memory stores the firmware program; or
the security system further comprises a random access memory RAM, and the ROM program is further configured to: obtain the firmware program, and store the firmware program in the RAM.

16. The apparatus according to any one of claims 12 to 15, wherein the first boot item is further configured to:
load the second boot item before sending the check request to the security system.

17. The apparatus according to any one of claims 12 to 16, wherein the secure boot apparatus further comprises a hardware system configured to run the secure boot chain, and the hardware system comprises a first protection unit and an accessed unit; and
the security system is further configured to: if the check result indicates that the check on the second boot item succeeds, set control permission of the first protection unit, so that the first protection unit controls access permission of the second boot item to the accessed unit.

18. The apparatus according to claim 17, wherein the hardware system further comprises a hardware resource having an address space access capability, and if the hardware resource needs to be used to boot the second boot item,
the first protection unit is further configured to control access permission of the second boot item to an address space of the accessed unit, wherein
the accessed unit comprises at least one of the following: a memory or a non-storage module; and the access permission comprises at least one of the following: read/write, read-only, write-only, or inaccessible.

19. The apparatus according to claim 18, wherein if the hardware resource comprises a processor, the access permission further comprises execution.

20. The apparatus according to any one of claims 12 to 19, wherein the secure boot apparatus further comprises the hardware system configured to run the secure boot chain, the hardware system further comprises a second protection unit and an accessed unit, and the second protection unit is configured to control access to an address space of the accessed unit; and
the security system is further configured to set control permission of the second protection unit.

21. The apparatus according to claim 20, wherein the hardware system further comprises the hardware resource having the address space access capability; and
the second protection unit is further configured to: when the hardware resource accesses the address space of the accessed unit, perform authentication on the access of the hardware resource, and allow the access of the hardware resource after the authentication succeeds.

22. The apparatus according to claim 12, wherein
the security system is further configured to: if the check result indicates that the check on the second boot item fails, perform threat processing on the second boot item.

23. A chip system, wherein the chip system comprises the secure boot apparatus according to any one of claims 12 to 22.

24. An electronic device, wherein the electronic device comprises the chip system according to claim 23.
